# EUROPEAN PATENT APPLICATION

(11) **EP 4 298 894 A1**
(43) Date of publication of application: **03.01.2024**
(21) Application number: 23176641.1
(22) Date of filing: 01.06.2023
(51) Int. Cl.: A01G 3/053

(54) **HEDGE TRIMMER HAVING A LEVEL**

(30) Priority: 28.06.2022 US 202263356322 P
(71) Applicant: Milwaukee Electric Tool Corporation, Brookfield WI 53005-2550 (US)
(72) Inventor: Corsiglia, Luke, Brookfield, 53005-2550 (US); Vollmar, Don, Brookfield, 53005-2550 (US); Cholst, Beth, Brookfield, 53005-2550 (US)
(74) Representative: Grünecker Patent- und Rechtsanwälte PartG mbB

(57) **Abstract**

A hedge trimmer (100) that includes a housing (102); a blade assembly (112) extending from the housing (102), wherein the blade assembly (112) defines a blade assembly plane (124); a level (128) configured to detect an orientation of the blade assembly plane (124) compared to a reference plane (130); and an indicator (132) configured to generate feedback to a user about the orientation of the blade assembly plane (124) compared to the reference plane (130).

## Description

### FIELD

The present disclosure relates generally to power tools, and more particularly to power tools including a level.

### BACKGROUND

Power tools are generally utilized to more efficiently perform work as compared to hand tools. However, this efficiency comes with certain drawbacks. For instance, because power tools allow operators to move more quickly, they allow for greater deviance in tolerances. By way of example, hedge trimmers allow operators to trim bushes, hedges and other branchy structures significantly faster than hand clippers. As a result, operators may move more quickly and the surface of the structures can deviate from desired orientations, particularly over larger areas.

Accordingly, improved ways of performing these tasks while maintaining good appearance are desired in the art. In particular, power tools which provide better leveling capability would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a hedge trimmer is provided. The hedge trimmer includes a housing; a blade assembly extending from the housing, wherein the blade assembly defines a blade assembly plane; a level configured to detect an orientation of the blade assembly plane compared to a reference plane; and an indicator configured to generate feedback to a user about the orientation of the blade assembly plane compared to the reference plane.

In accordance with another embodiment, a hedge trimmer is provided. The hedge trimmer includes a housing; a blade assembly extending from the housing, wherein the blade assembly defines a blade assembly plane; a level configured to detect an orientation of the blade assembly plane compared to a reference plane; and an auto-leveling device in communication with the level, wherein the auto-leveling device is configured to urge the hedge trimmer to align the blade assembly plane with the reference plane.

In accordance with another embodiment, a method of using a hedge trimmer including a blade assembly defining a blade assembly plane is provided. The method includes setting a reference plane for the blade assembly, the reference plane corresponding with a desired cutting angle, wherein setting the reference plane comprises orienting the blade assembly at the desired cutting angle; and zeroing the reference plane to a current blade assembly plane with the blade assembly at the desired cutting angle; and performing a cutting operation.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of a hedge trimmer in accordance with embodiments of the present disclosure;
FIG. 2 is a schematic view of a blade assembly of the hedge trimmer depicted against a reference plane in accordance with embodiments of the present disclosure;
FIG. 3 is a schematic view of a blade assembly of the hedge trimmer depicted against a reference plane in accordance with embodiments of the present disclosure; and
FIG. 4 is a flowchart of a method of using a hedge trimmer in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

As used herein, the term "power tool" is intended to refer to a device which is used to perform a work operation, such as cutting materials like wood, metal, concrete, grass, or the like; trimming objects like branches; biasing fluids like air and water; and the like. By way of non-limiting example, power tools can include chainsaws, circular saws, reciprocating saws, grinders, pruners, string trimmers, lawnmowers, edgers, blowers, vacuums, snow throwers, mixers, augers, pumps, pipe threaders, drills, and impact wrenches. While embodiments provided below are directed to hedge trimmers, one or more components of the hedge trimmer described below, such as the level or auto-leveling device, may be utilized with one or more different types of power tools.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, power tools described in accordance with embodiments herein can include leveling features which allow an operator to more easily maintain a desired orientation of the power tool during use thereof. By way of example, the power tool can include a hedge trimmer. The hedge trimmer can include a blade assembly which extends along a plane or a best fit line. The operator can detect the orientation of the plane or best fit line of the blade assembly using a level. The level can be coupled to the power tool and detect orientation of the blade. In certain instances, the level can detect an orientation of the blade assembly relative to a vertical axis. In other instances, the level can detect orientation of the blade assembly relative to a reference plane. The reference plane can be angularly offset from a vertical axis, thereby allowing the operator to detect angular offset between the blade assembly and a desired axis or plane. The reference plane may be configurable such that the operator can set the reference plane. In some instances, the power tool can further include an auto-leveling device. The auto-leveling device can be in communication with the level. The auto-leveling device can be configured to urge the power tool to align the blade assembly with the reference plane. These and other features of the embodiments described herein are now referenced with respect to the figures.

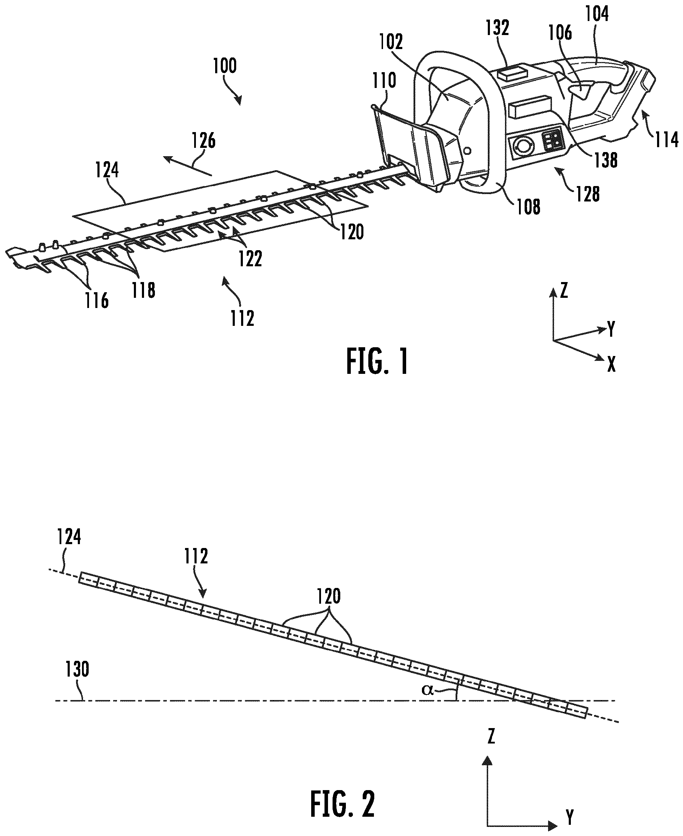

Referring now to the drawings, FIG. 1 illustrates a view of a hedge trimmer 100 in accordance with an exemplary embodiment of the present disclosure. The hedge trimmer 100 generally includes a housing 102, a first handle 104, an actuator 106 disposed adjacent to the first handle 104, a second handle 108, a guard 110, and a blade assembly 112. The hedge trimmer 100 can further include a motive device (not illustrated) such as an electric motor or a gas engine. In the depicted embodiment, the hedge trimmer 100 includes a battery receiving area 114 which receives a battery (not illustrated) to power an electric motor. The electric motor can drive the blade assembly 112.

The blade assembly 112 can generally include a one or more blades, e.g., a first blade 116 and a second blade 118, that move relative to one another. At least one of the blades 116 and 118 can move in a reciprocating manner. Cutting edges disposed along adjacent teeth 120 can cut material introduced into areas 122 disposed between the adjacent teeth 120 as the blade assembly 112 moves.

The blade assembly 112 can extend from the housing 102 and lie along a plane. The plane of the blade assembly 112 may be referred to as the blade assembly plane 124. The blade assembly plane 124 generally maintains a fixed relationship with respect to the housing 102 during operation of the hedge trimmer 100. Thus, as the housing 102 is manipulated by the operator, e.g., as a relative angle of the housing 102 is changed through input exhibited by the operator on the first and second handles 104 and 108, the blade assembly plane 124 can move by a generally similar angular displacement. It should be understood that deviation between the blade assembly plane 124 and housing 102 may be attributable, e.g., to deflection in the blade assembly 112 or tolerance at an interface between the blade assembly 112 and the housing 102. However, in general, the blade assembly plane 124 can have a generally fixed relationship with respect to the handles 104 and 108.

As a result of the cutting edges of the teeth 120 being disposed along a single plane, the blade assembly 112 forms a planar cut when moved in a single direction 126. That is, for example, an object being cut, e.g., a bush, can achieve a generally planar surface under certain operating conditions. However, any imprecision while operating the hedge trimmer 100 can cause the surface of the object being cut to deviate from a planar surface. For instance, over long cutting distances, the operator may unknowingly rotate the hedge trimmer about an axis, such as an X-axis, resulting in a non-planar surface. Similarly, the operator may not maintain exact angular orientation of the hedge trimmer 100 during consecutive passes for cutting operations which require multiple passes. This can result in an uneven surface in the object being cut. These uneven, non-planar cuts can result in poor visual aesthetic of the object.

In an embodiment, the hedge trimmer 100 can include a level 128. The level 128 can help facilitate more consistent cutting. In some instances, the level 128 can include a digital level. In other instances, the level 128 can include a bubble level. In yet other instances, the level 128 can include a digital level and a bubble level.

In certain instances, the level 128 can be integrated into the hedge trimmer 100, i.e., be part of the hedge trimmer 100 and not an attachment to the hedge trimmer 100 or a stand alone device used in conjunction with the hedge trimmer 100. In other instances, the level 128 can be an attachable assembly which is removable from the hedge trimmer 100. The level 128 can detect a relative orientation of the hedge trimmer 100 and detect changes made to the orientation. More specifically, the level 128 can detect the angular orientation of the blade assembly plane 124 as compared to a reference plane. As described in greater detail below, the reference plane can be fixed or adjustable.

FIG. 2 illustrates a schematic side view of the blade assembly 112 depicting the blade assembly plane 124 angularly offset from a reference plane 130 corresponding with a generally horizontal plane. The blade assembly plane 124 is angularly offset from the reference plane 130 by an angular displacement a. The level 128 can detect the angular displacement α of the blade assembly plane 124 as compared to the reference plane 130. While only depicted angularly offset in an X-direction, the blade assembly plane 124 can be angularly offset from the reference plane 130 by more than one axis, such as two axis, or even three axis. In certain instances, the level 128 can detect a simple level orientation relative to the reference plane 130. Simple level orientation can refer to an angular displacement of the blade assembly plane 124 relative to the reference plane 130 without quantifying the amount of displacement along each axis. In other instances, the level 128 can detect complex level orientation relative to the reference plane 130. That is, the level 128 can detect the relative amount of angular displacement exhibited in each individual axis.

An indicator 132 (FIG. 1) can be in communication with the level 128. The indicator 132 can generate feedback to the operator in view of the orientation of the blade assembly plane 124, e.g., as compared to the reference plane 130. By way of non-limiting example, the indicator 132 can include a visual indicator, such as a light emitting device; an audible indicator, such as a speaker; a tactile indicator, such as a haptic feedback unit; a motor control indicator which controls an operational aspect of the blade assembly, e.g., a speed of reciprocation; or a combination thereof. The indicator 132 can generate feedback to the operator that informs the operator when the blade assembly plane 124 is offset from the reference plane 130 by more than a prescribed amount. For instance, when the indicator 132 is a visual indicator, one or more lights may illuminate when the blade assembly plane 124 is angularly offset from the reference plane 130 by more than a prescribed angular displacement. Similarly, when the indicator 132 is an audible indicator, a noise may be generated when the blade assembly plane 124 is angularly offset from the reference plane 130 by more than the prescribed angular displacement. By way of another example, when the indicator 132 is a motor control indicator, the speed of reciprocation of the blade assembly 112 may decrease or stop when the blade assembly plane 124 is angularly offset from the reference plane 130 by more than the prescribed displacement.

In an embodiment, the indicator 132 may be a binary indicator. Binary indicators can generate a single signal type. For instance, the binary indicator may include a light emitting device which is illuminated to a fixed brightness or same color when the blade assembly plane 124 is offset from the reference plane 130 regardless of a degree of displacement relative to the reference plane 130. The binary indicator does not provide indication of the amount of offset. In another embodiment, the indicator 132 may be a variable indicator. Variable indicators may generate different signals to the operator. For instance, the variable indicator may include a light emitting device which illuminates differently based on the amount of angular displacement between the blade assembly plane 124 and the reference plane 130. For example, the light emitting device can become brighter as the blade assembly plane 124 becomes more angularly displaced from the reference plane 130. Similarly, for motor control indicators, the speed of reciprocation of the blade assembly 112 can decrease, e.g., to a stop, as the angular displacement of the blade assembly plane 124 increases relative to the reference plane 130. In an embodiment, the change in feedback can be stepped between a plurality of discrete feedback indications. For instance, the light emitting device can change between a fixed number of different brightness intensities. In another embodiment, the change in feedback can be effectively infinitely adjustable between a minimum feedback indication and a maximum feedback indication. That is, the amount of feedback can correspond directly with the amount of angular displacement between the blade assembly plane 124 and the reference plane 130.

As shown in FIG. 2, the blade assembly 112 is angularly offset from the reference plane 130 by an angle α. The reference plane 130 generally corresponds to a horizontal plane, i.e., perpendicular to a vertical axis Y. The reference plane 130 depicted in FIG. 2 may correspond with the blade assembly plane 124 when, e.g., the operator is performing cutting operations on the top side of a bush and wants a flat upper surface profile.

In the embodiment depicted in FIG. 2, the indicator 132 can indicate to the operator the angular displacement α. As noted above, the indicator 132 can provide information which allows the operator to correct the angular orientation of the blade assembly plane 124.

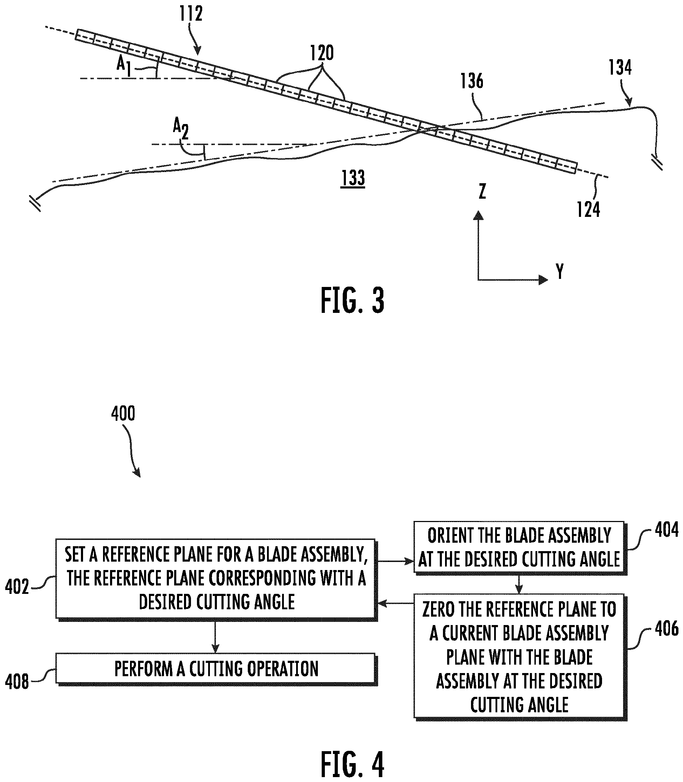

In certain instances, the reference plane 130 can be adjustable. That is, the reference plane 130 does not always have to align with the horizontal plane depicted in FIG. 2. FIG. 3 illustrates a schematic side view of the blade assembly 112 with the blade assembly plane 124 oriented at a first relative angle A₁ about the X-axis. An object 133 is shown with a surface 134 having a best fit plane 136 oriented at a second relative angle A₂ about the X-axis. By way of non-limiting example, the object 133 can include a bush, a fence, the ground, or another element at a work area. The surface 134 can be a surface of the object 133, such as, for example, a surface of the bush being cut or a fence near the bush, a surface of the ground, or the like.

In certain instances, it may be desirable to align the blade assembly plane 124 with the best fit plane 136 of the surface 134. Thus, the best fit plane 136 may be used to set the reference plane 124. By way of non-limiting example, when trimming a row of bushes, it may be desirable to maintain the surface angle of the bushes at a fixed angle to present the bushes as a continuous row. By way of another example, when trimming near a fence, it may be desirable to match a surface of a bush being trimmed with the angle of the fence. By way of yet another example, it may be desirable to match an angle of the ground when trimming a top surface of a bush. In all of these instances, the level 128 can be used to calibrate and maintain the desired angular orientation of the hedge trimmer 100. The following explanation describes one exemplary method for setting a reference plane.

FIG. 4 illustrates a flow chart of a method 400 of using a hedge trimmer including a blade assembly defining a blade assembly plane. The method 400 includes a step 402 of setting a reference plane of the blade assembly, the reference plane corresponding with a desired cutting angle. As described with respect to FIG. 3, the reference plane may be a desired plane the operator wishes to cut at. For example, the reference plane may correspond with a best fit plane of a surface of an object, e.g., a bush, fence, or the like. By setting the reference plane parallel with the best fit plane of the surface, the operator can calibrate the hedge trimmer to allow for future cutting operations to closely align with the surface of the object. Alternatively, the reference plane may be another desired angle which is based off of an arbitrary angle or a calculated angle unrelated to any local surfaces of the environment. For example, the operator may decide to cut a new pattern into a surface of an object, e.g., a bush. The operator can set the reference pattern based on this new surface design rather than an existing surface in the local environment.

The step 402 of setting the reference plane can include a step 404 of orienting the blade assembly at the desired angle. The desired angle may be parallel with the best fit plane of the surface of the object. Alternatively, the desired angle may be set independent of any local surfaces at the local environment. By orienting the blade assembly at the desired angle, the operator is orienting the blade assembly plane at the desired angle. With the blade assembly oriented at the desired angle, the operator can zero the reference plane to the current blade assembly plane at step 406. In certain instances, step 406 can be performed by the operator actuating one or more interfaces of the hedge trimmer. For example, the hedge trimmer can have a zeroing button which is selectively engageable. By way of another example, the hedge trimmer can have a digital user interface with a selectable command to zero the reference plane. By way of yet another example, the hedge trimmer may be configured to zero the reference plane through a sequence of predetermined actions at the actuator 106. For example, zeroing may be performed by pressing the actuator 106 a plurality of consecutive times. Yet other methods of zeroing the reference plane are contemplated herein and are not intended to be limited by the aforementioned exemplary embodiments.

With the reference plane zeroed, the operator can then initiate a cutting operation at step 408. With the reference plane zeroed, the cutting operation can be performed in view of the indication provided by the indicator. For example, as the blade assembly plane deviates from the reference plane by a prescribed angular displacement, the indicator can inform the operator of such deviation. In some instances, the prescribed angular displacement can be fixed. For example, the indicator can signal to the operator that angular deviation has occurred when the angular displacement is at least 1°, such as at least 2°, such as at least 3°, such as at least 4°, such as at least 5°, such as at least 10°, such as at least 15°, such as at least 20°, such as at least 25°. In other instances, the prescribed angular displacement can be adjustable. The operator can thus select the prescribed angular displacement from the reference plane. By way of non-limiting example, adjustment of the prescribed angular displacement can be performed via a rotary or translational dial, using a depressible button, through a digital user interface, or the like. In an embodiment, the prescribed angular displacement can be set before setting the reference plane. In another embodiment, the prescribed angular displacement can be set after setting the reference plane.

Referring again to FIG. 1, the hedge trimmer 100 can further include an auto-leveling device 138. In an embodiment, the auto-leveling device 138 can be coupled to the housing 102. For example, the auto-leveling device 138 can be disposed at least partially within the housing 102. In another embodiment, the auto-leveling device 138 can be coupled to the blade assembly 112, the guard 110, or another component of the hedge trimmer 100. The auto-leveling device 138 can be configured to generate a force on the housing 102 to affect an angular position of the hedge trimmer 100. For example, the auto-leveling device can be configured to generate a rotational force about any one or more of the X-, Y-, or Z-axis.

By way of non-limiting example, the auto-leveling device 138 can include a gyroscope, a flywheel, or the like. As the blade assembly plane 124 of the hedge trimmer 100 deviates from the reference plane 130 or 136, the auto-leveling device 138 can urge the hedge trimmer 100 so as to restore the blade assembly plane 124 to an angle parallel to the reference plane 130 or 136.

Further aspects of the invention are provided by one or more of the following embodiments:
Embodiment 1. A hedge trimmer comprising: a housing; a blade assembly extending from the housing, wherein the blade assembly defines a blade assembly plane; a level configured to detect an orientation of the blade assembly plane compared to a reference plane; and an indicator configured to generate feedback to a user about the orientation of the blade assembly plane compared to the reference plane.
Embodiment 2. The hedge trimmer of any one or more of the embodiments, wherein the reference plane is adjustable.
Embodiment 3. The hedge trimmer of any one or more of the embodiments, wherein the reference plane is adjusted by orienting the blade assembly at a desired angle and zeroing the reference plane with the blade assembly oriented at the desired angle.
Embodiment 4. The hedge trimmer of any one or more of the embodiments, wherein the level comprises a digital level, a bubble level, or both.
Embodiment 5. The hedge trimmer of any one or more of the embodiments, wherein the indicator comprises a visual indicator, an audible indicator, a tactile indicator, a motor control indicator, or any combination thereof.
Embodiment 6. The hedge trimmer of any one or more of the embodiments, wherein the motor control indicator is configured to adjust an operating speed of the blade assembly as the orientation of the blade assembly plane exceeds a prescribed angular displacement from the reference plane.
Embodiment 7. The hedge trimmer of any one or more of the embodiments, wherein the level is in communication with an auto-leveling device of the hedge trimmer, the auto-leveling device being configured to urge the hedge trimmer such that the blade assembly plane is parallel with the reference plane.
Embodiment 8. The hedge trimmer of any one or more of the embodiments, wherein the auto-leveling device comprises a gyroscope, a flywheel, or both
Embodiment 9. A hedge trimmer comprising: a housing; a blade assembly extending from the housing, wherein the blade assembly defines a blade assembly plane; a level configured to detect an orientation of the blade assembly plane compared to a reference plane; and an auto-leveling device in communication with the level, wherein the auto-leveling device is configured to urge the hedge trimmer to align the blade assembly plane with the reference plane.
Embodiment 10. The hedge trimmer of any one or more of the embodiments, wherein the auto-leveling device comprises a gyroscope, a flywheel, or both.
Embodiment 11. The hedge trimmer of any one or more of the embodiments, wherein an urging force generated by the auto-leveling device is approximately equal to zero when the blade assembly plane is parallel with the reference plane.
Embodiment 12. The hedge trimmer of any one or more of the embodiments, wherein the auto-leveling device is selectively activated by a user between an on-state and an off-state.
Embodiment 13. The hedge trimmer of any one or more of the embodiments, wherein the reference plane is adjusted by orienting the blade assembly at a desired angle and zeroing the reference plane with the blade assembly oriented at the desired angle.
Embodiment 14. The hedge trimmer of any one or more of the embodiments, wherein the hedge trimmer comprises a motor that drives the blade assembly, wherein the motor is in electrical communication with a battery, and wherein the battery provides power to the auto-leveling device.
Embodiment 15. A method of using a hedge trimmer including a blade assembly defining a blade assembly plane, the method comprising: setting a reference plane for the blade assembly, the reference plane corresponding with a desired cutting angle, wherein setting the reference plane comprises: orienting the blade assembly at the desired cutting angle; and zeroing the reference plane to a current blade assembly plane with the blade assembly at the desired cutting angle; and performing a cutting operation.
Embodiment 16. The method of any one or more of the embodiments, wherein the method further comprises adjusting an angle of the blade assembly plane during the cutting operation to better align with the reference plane, and wherein adjusting the blade assembly plane is performed in view of information from a level of the hedge trimmer.
Embodiment 17. The method of any one or more of the embodiments, wherein adjusting the blade assembly plane during the cutting operation is performed with assistance of an auto-leveling device of the hedge trimmer, and wherein the auto-leveling device is configured to urge the hedge trimmer to align the current blade assembly plane with the reference plane.
Embodiment 18. The method of any one or more of the embodiments, wherein the auto-leveling device comprises a gyroscope, a flywheel, or both.
Embodiment 19. The method of any one or more of the embodiments, wherein the level comprises a digital level, a bubble level, or both.
Embodiment 20. The method of any one or more of the embodiments, wherein orienting the blade assembly at the desired cutting angle is performed by positioning the blade assembly adjacent to a surface of an object having the desired cutting angle such that the blade assembly plane is parallel with the surface of the object.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A hedge trimmer comprising:
a housing;
a blade assembly extending from the housing, wherein the blade assembly defines a blade assembly plane;
a level configured to detect an orientation of the blade assembly plane compared to a reference plane; and
an indicator configured to generate feedback to a user about the orientation of the blade assembly plane compared to the reference plane.

2. The hedge trimmer of claim 1, wherein the reference plane is adjustable.

3. The hedge trimmer of claim 2, wherein the reference plane is adjusted by orienting the blade assembly at a desired angle and zeroing the reference plane with the blade assembly oriented at the desired angle.

4. The hedge trimmer of any one of the preceding claims, wherein the level comprises a digital level, a bubble level, or both.

5. The hedge trimmer of any one of the preceding claims, wherein the indicator comprises a visual indicator, an audible indicator, a tactile indicator, a motor control indicator, or any combination thereof.

6. The hedge trimmer of claim 5, wherein the motor control indicator is configured to adjust an operating speed of the blade assembly as the orientation of the blade assembly plane exceeds a prescribed angular displacement from the reference plane.

7. The hedge trimmer of any one of the preceding claims, wherein the level is in communication with an auto-leveling device of the hedge trimmer, the auto-leveling device being configured to urge the hedge trimmer such that the blade assembly plane is parallel with the reference plane.

8. The hedge trimmer of claim 7, wherein the auto-leveling device comprises a gyroscope, a flywheel, or both

9. A hedge trimmer comprising:
a housing;
a blade assembly extending from the housing, wherein the blade assembly defines a blade assembly plane;
a level configured to detect an orientation of the blade assembly plane compared to a reference plane; and
an auto-leveling device in communication with the level, wherein the auto-leveling device is configured to urge the hedge trimmer to align the blade assembly plane with the reference plane.

10. The hedge trimmer of claim 9, wherein the auto-leveling device comprises a gyroscope, a flywheel, or both.

11. The hedge trimmer of any one of claims 9 or 10, wherein an urging force generated by the auto-leveling device is approximately equal to zero when the blade assembly plane is parallel with the reference plane.

12. The hedge trimmer of any one of claims 9, 10, or 11, wherein the auto-leveling device is selectively activated by a user between an on-state and an off-state.

13. The hedge trimmer of any one of claims 9, 10, 11 or 12, wherein the reference plane is adjusted by orienting the blade assembly at a desired angle and zeroing the reference plane with the blade assembly oriented at the desired angle.

14. The hedge trimmer of any one of claims 9, 10, 11, 12 or 13, wherein the hedge trimmer comprises a motor that drives the blade assembly, wherein the motor is in electrical communication with a battery, and wherein the battery provides power to the auto-leveling device.

15. A method of using a hedge trimmer including a blade assembly defining a blade assembly plane, the method comprising:
setting a reference plane for the blade assembly, the reference plane corresponding with a desired cutting angle, wherein setting the reference plane comprises:
orienting the blade assembly at the desired cutting angle; and
zeroing the reference plane to a current blade assembly plane with the blade assembly at the desired cutting angle; and
performing a cutting operation.
